# EUROPEAN PATENT SPECIFICATION

(11) **EP 2 771 260 B1**
(45) Date of publication and mention of the grant of the patent: **22.02.2017**
(21) Application number: 12783170.9
(22) Date of filing: 23.10.2012
(51) Int. Cl.: B65D 85/804

(54) **CAPSULE FOR THE PREPARATION OF A BEVERAGE BY CENTRIFUGATION WITH A SEALING FLANGE**
KAPSEL ZUR HERSTELLUNG EINES GETRÄNKS DURCH ZENTRIFUGIERUNG MIT EINEM DICHTFLANSCH
CAPSULE POUR LA PRÉPARATION DE BOISSONS PAR CENTRIFUGATION AVEC UNE BRIDE ÉTANCHE

(30) Priority: 24.10.2011 EP 11186325
(43) Date of publication of application: 03.09.2014
(73) Proprietor: Nestec S.A., 1800 Vevey (CH)
(72) Inventor: PERENTES, Alexandre, CH-1012 Lausanne (CH); ABEGGLEN, Daniel, CH-1439 Rances (CH); GERBAULET, Arnaud, F-25160 Oye et Pallet (FR); TINEMBART, Jean-François, CH-1400 Yverdon (CH); BIZET, Bruno, F-71260 Montbellet (FR); BEZET, Nicolas, Jean-Guy, F-7100 Macon (FR)
(74) Representative: Borne, Patrice Daniel
(86) International application number: PCT/EP2012/070904
(87) International publication number: WO 2013/060654

(56) References cited:
- WO-A1-2008/148650

## Description

### Field of the invention

The present invention relates to the field of beverage preparation using capsules by way of centrifugation. More particularly, the invention relates to a capsule with a sealing means for effectively sealing an inlet side of a capsule during the injection of liquid by means of a dedicated perforation member of a beverage preparation device according to the preamble of claim 1.

### Background of the invention

Capsules containing beverage ingredients and designed for producing a beverage in a beverage preparation device upon liquid injection into the capsules and by rotating the capsules around a central axis in the device are known in the prior art.

The principle consists in preparing a beverage by passing a liquid through beverage ingredients contained in the capsule using centrifugal forces. Thereby, liquid is usually injected in a central inlet area of the capsule before and/or during rotation of the capsule in order to make the liquid interact with the ingredients in the capsule, thus forming a beverage such as coffee, ground coffee, tea, or the like. The resulting beverage is then allowed to exit the capsule by means of at least one outlet aperture provided at a portion arranged radially outwards with respect to the central inlet area of the capsule. A capsule for preparing a beverage or liquid food and a system using centrifugal forces is for example described in WO2008/148604. The capsule is formed of a body containing a substance such as coffee powder which is closed by a membrane. The membrane is perforated by an injection member of a beverage preparation device in the central part of the membrane for injection of liquid and is simultaneously perforated in the peripheral part of the membrane by smaller piercing members for extraction of the beverage.

The above-indicated prior art suffers the disadvantage that injection liquid may bypass the substance contained in the capsule at the injection side of the capsule. In particular, when injection liquid fills the capsule, liquid may leak out from the central inlet of the capsule and thereby be centrifuged on the outside of the upper surface of the capsule which may affect the quality of the produced beverage.

WO2010/063644 relates to a capsule for preparing a beverage using centrifugal forces, the capsule comprising a tightness-producing layer provided at least at a central portion of the inlet wall of the capsule in order to obtain sealing of the capsule during beverage preparation. Thereby, the tightness-producing layer is preferably of resilient or soft material comparatively thicker than the same material in a peripheral outlet portion of the capsule.

This solution however suffers the drawback that a relatively high piercing force is to be applied to enable piercing of the tightness-producing layer. Furthermore, buckling of the membrane at the inlet side of the capsule may occur which may affect the sealing properties of the capsule.

Therefore, a capsule comprising enhanced sealing properties is sought-after which overcomes the above-identified problems and which enables the provision of a liquid-tight seal of the inlet side of the capsule during beverage preparation.

These objects are achieved by means of the features of the independent claims. The depending claims develop further the central idea of the present invention.

### Object and summary of the invention

In a first aspect, the present invention relates to a capsule according to claim 1.

The capsule may be filled with a predetermined amount of beverage ingredients at the manufacturing site, i.e., be "prefilled" (and thus sold at least partially filled with beverage ingredients) and/or may be filled with a desired amount of beverage ingredients by the consumer.

According to the invention, an annular inwardly protruding flange is formed about the central liquid inlet. Thereby, the annular engagement portion according to the invention is either present as a preformed flange or may be formed upon engagement with a dedicated perforating injection member.

The central liquid inlet of the upper wall is geometrically designed to facilitate the opening of the capsule. Therefore, the liquid inlet comprises a portion of wall of reduced thickness. The wall portion of reduced thickness can a relatively thin openable central portion of wall when compared to the thickness of at least the peripheral portion of the upper wall, or can be a mere opening formed in the centre of the liquid inlet.

As "flange" within the context of this invention, an annular sealing collar or equivalent is understood which provides a liquid-tight sealing engagement at the circumference of the liquid injection member.

Hence, by contrast to a provided material layer of constant thickness which is prone to crack respectively tear at least partially in the boundaries enclosing an intruding piercing member, a constant liquid-tight sealing engagement is provided about the circumference of the piercing member without the need for a large-volume sealing member provided at the inlet site of the capsule. According to the invention, the force necessary for introduction of an injection member into the capsule is reduced while at the same time effective sealing of the inlet site of the capsule is obtained. In addition, a buckling of the upper wall of the capsule, in direction inwards the capsule, may effectively be prevented.

Moreover, an annular support is provided for the injection member during liquid injection and/or rotation of the capsule around its central axis.

Within the context of the present invention, the term "perforating injection member" encompasses any kind of perforating or non-perforating intruding member of a dedicated beverage preparation device enabling to feed liquid into the capsule from an external supply of liquid. According to a preferred embodiment of the invention, the term "perforating injection member" relates to a piercing member of elongated shape comprising one or more liquid supplying outlets at its free end.

Preferably, peripheral outlet openings or apertures are positioned relatively closer to the sidewall of the capsule than to the central inlet, and the upper wall is free of openings in the intermediate zone between such openings and the central inlet. This outlet configuration for the capsule enables to ensure a proper flow of the centrifuged liquid through the beverage ingredients in the capsule and in particular avoids privileged flow-path by-passing the ingredients, e.g., coffee bed.

In a preferred embodiment of the invention, the inwardly protruding flange forms, alone or in combination with a portion of reduced thickness of the central inlet, a flexible sealing lip designed to exert a radial inwardly directed force onto an annular portion of the perforating injection member.

The annular engagement portion protrudes from the upper peripheral portion or is formed in recess from the peripheral portion of the upper wall of the capsule.

The annular engagement portion preferably differs geometrically from the peripheral portion of the upper wall. Thereby, the geometrical difference may be a different material thickness and/or a different cross-sectional shape.

The annular engagement portion is preferably integrally formed with the upper wall. Thereby, the engagement portion is preferably bent or tapered toward the inside centre of the capsule.

Moreover, the annular engagement portion may be essentially funnel-shaped directed towards the interior of the capsule. The term "funnel-shaped" encompasses any geometrical shape of the annular engagement portion having essentially tapered circumferential walls such as a cone shape. Thereby, the annular engagement portion may comprise - when seen in sectional side view - a radial component in particular at a transition portion between the upper wall and the annular engagement portion.

The annular engagement portion may be tapered with respect to a centre axis of the capsule about an angle of between 10 and 70 degrees, more preferably between 20 and 60 degrees, even more preferably between 40 and 55 degrees.

In an embodiment, the annular engagement portion comprises a minimum inner diameter that is configured to be smaller than an outer diameter of the perforating injection member of the beverage preparation device. Thereby, the inner diameter of the annular engagement portion may be constant or decreasing towards the centre axis of the capsule.

The annular engagement portion may as well be formed of a material which is plastically and/or elastically deformable upon introduction of the dedicated injection member through the inlet. Thus, when a perforating injection member is introduced to the engagement portion having an inner diameter smaller than the outer diameter of the perforating engagement portion, the annular engagement portion may be plastically and/or elastically deformed radially outwardly and/or axially directed towards the centre of the capsule to form a liquid-tight sealing engagement with the injection member.

The annular engagement portion is arranged between the liquid inlet and the peripheral portion of the upper wall. The annular engagement portion may as well be arranged to at least partially overlap with the liquid inlet. The annular engagement portion is preferably integrally formed with the portion of reduced thickness of the liquid inlet of the upper wall of the capsule. The wall portion of reduced thickness may be designed to be elastically and/or plastically deformable. Thereby, the wall portion of reduced thickness has an elongation at yield of at least 10%, preferably at least 50%, most preferably at least 100% by reference to standard ISO 527-3:1995.

The wall portion of reduced thickness is preferably a centre portion of the liquid inlet which is of circular shape when seen in top view onto the capsule. Thereby, said wall portion is easily perforable or tearable by means of the injection member of a dedicated beverage preparation device.

The wall portion of reduced thickness may as well be a ring-shaped or arc-shaped portion when seen in top view onto the capsule.

The thickness of said wall portion is preferably constant and/or arranged to diminish towards the centre of the capsule when seen in sectional side view.

In another preferred mode, the annular engagement portion arranged radially inside of the peripheral portion of the upper wall is arranged to at least partially overlap the central inlet of the upper wall.

The engagement portion may as well be designed to fully cover the liquid inlet which may be a wall portion of reduced thickness or an opening in the upper wall.

Thereby, the engagement portion can be of different material than the upper wall. In particular, the annular engagement portion can be preferably formed of softer and/or more resilient material than the upper wall.

Moreover, the annular engagement portion may be designed to interact with the upper wall upon introduction of the perforating injection member in order to form the inwardly protruding inlet flange.

The upper wall of the capsule is preferably made of a material or materials chosen amongst plastic(s), biodegradable plastic(s), bio-based polymer(s), aluminum, cellulose-based material(s) such as paper and combinations thereof made from plastic or biodegradable plastic. Moreover, the upper wall may as well be of any other biodegradable material.

The liquid inlet and/or the engagement portion of the upper wall is at least partially made from a material that softens and/or expands in presence of hot water in order to increase the liquid-tight sealing engagement between the upper wall and the perforating injection member by supplied liquid in the capsule.

According to such an embodiment, enhanced sealing upon interaction of the material with hot liquid is obtained without the need for providing a preformed large-volume sealing member.

In a further aspect, the present invention relates to a beverage preparation system comprising a capsule according to any of the preceding claims and a beverage preparation device comprising a liquid injections means connected to a liquid reservoir of the device and designed for supplying liquid to the capsule.

In a further aspect, the present invention relates to a kit according to claim 12.

In the context of the invention, the term "without using tools" means that the user may associate the capsule body and the upper wall or lid member of the kit essentially without the help of any additional means which are to be provided to the kit such as a mechanical press or a specific association tool.

For example, the lid member and body may be provided with complementary press-fitting means allowing a rapid manual connection.

According to the invention, in particular due to the fact that the upper wall or lid member may be provided separately to the preferably rotational-symmetric capsule body, the sealing properties of the capsule may be adapted to a specific liquid injection means.

In particular, upper walls or lid members comprising liquid inlets and/or annular engagement portions of different geometric shapes and/or hardness respectively resilience may thus be provided to the capsule body in order to enable an adjustment of the sealing properties thereof.

A further advantage of such a capsule kit resides in the fact that a user may provide his preferred beverage ingredient to the capsule. Furthermore, the filling level, respectively the volume of a beverage ingredient to be provided to the capsule interior can be individually chosen in order to meet particular taste preferences of the user.

In addition, upper walls or lid members having peripheral outlet apertures of different amounts and/or geometries may be provided with the kit according to the invention.

Thereby, due to the independently applicable upper walls or lid members having different outlet apertures, a user may be enabled to adjust the extraction properties of the capsule in relation to at least the different filling levels and/or granulate characteristics of a beverage ingredient to be provided to the capsule.

### Brief description of the figures

Further features, advantages and objects of the present invention will become apparent to the skilled person when reading the following detailed description of embodiments of the present invention, when taken in conjunction with the figures of the enclosed drawings.
- Fig. 1a to 1c: relate to a first preferred embodiment according to the present invention in sectional side view, wherein the liquid inlet comprises a central portion of reduced thickness surrounded by a preformed inlet flange.
- Fig. 2a to 2c: relate to another preferred embodiment according to the present invention in sectional side view, wherein the portion of reduced thickness is ring-shaped and surrounded by a preformed inlet flange.
- Fig. 3a to 3c: relate to another preferred embodiment according to the present invention in sectional side view, wherein the annular engagement comprises a reinforcement structure.
- Fig. 4a to 4c: relate to another preferred embodiment according to the present invention in sectional side view, wherein the liquid inlet comprises a central opening.
- Fig. 5a to 5c: relate to another preferred embodiment according to the present invention, in which the annular engagement portion is covering a central opening of the upper wall and is designed to form an inwardly protruding inlet flange during cause of interaction with a dedicated injection member.

### Detailed description of embodiments

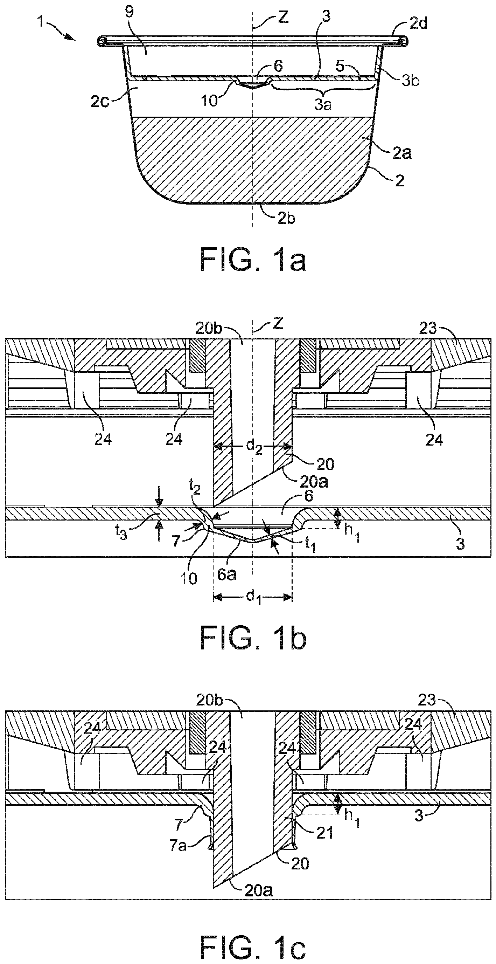

Figure 1 a shows a sectional side view of a capsule 1 according to a preferred embodiment of the invention. The capsule 1 comprises a body 2 having a side wall 2a, a bottom portion 2b and an annular flange-like rim 2d which surrounds an aperture respectively mouth opening 2c of the body.

Within the aperture or opening 2c of the capsule 1, an upper wall 3 is inserted to, at least preferably partially, close off the mouth opening 2c, thereby enclosing beverage ingredients (not shown) within the body 2 of the capsule 1.

Accordingly, the side wall 2a, the bottom portion 2b and the upper wall 3 of the capsule 1 enclose a compartment for containing beverage ingredients such as ground coffee or the like.

It is to be noted that the flange-like rim 2d of the capsule 1 may as well be formed by the upper wall 3 or be constituted at least partially by the upper wall 3 and/or the body 2 of the capsule 1.

The capsule 1 can be rotationally symmetric around a central axis respectively a symmetric axis Z. Thus, the capsule 1 is designed to be used in a dedicated beverage preparation device arranged for driving the capsule in centrifugation around axis Z to generate centrifugal forces in order to prepare the beverage from supplied liquid and from the ingredients contained in the capsule 1. For this purpose, the upper wall 3 comprises a central liquid inlet 6 and peripheral outlet openings respectively apertures 5 which are preferably arranged at a peripheral portion 3a of the upper wall 3.

In general, the peripheral outlet openings or apertures 5 are positioned relatively closer to the sidewall 2a than to the central axis Z in order to allow the brewed liquid which is ejected by the centrifugal forces in the compartment to leave the capsule 1. The openings 5 are also sufficiently small so that the ingredient particles, e.g., coffee particles, are essentially prevented from leaving the compartment. For this, each opening 5 has a transversal dimension, e.g., an average diameter, which is smaller than the mean volumetric diameter of the particles (D_{4,3}). Possibly, small particles such as coffee fines may still traverse the capsule 1, nevertheless without affecting the quality of the brewed beverage.

The outlet openings 5 can also be formed of a band of porous material such as filter paper or a woven or non-woven fabric closing one or more windows of the upper wall 3.

The upper wall 3 is preferably connected to the inner side wall of the body 2 of the capsule 1 and/or to the flange-like rim portion 2d.

Moreover, the upper wall 3 is preferably recessed inwardly from the annular flange-like rim portion 2d, thereby forming a recess 9 in the upper wall of the capsule. Accordingly, a support member 23 surrounding a dedicated injection member 20 of a beverage preparation device to be used in conjunction with the capsule 1 may be introduced in said recess 9 to possibly enter into contact with the upper wall 3.

Moreover, a relief structure 24 of the support member 23 is provided which is normally designed to perforate or break an (optional) top membrane sealed onto the flange-like rim 2d (not shown). The relief structure 24, which may be a series of pyramids or needle-shaped members, protrudes from the surface of the support member 23. The relief structure can thus enter the recess 9 of the capsule 1 while perforating the top membrane, if necessary, but without perforating the upper wall 3.

The sealing or top membrane is preferably welded to the flange-like rim 2d of the body. In an alternative, the capsule does not comprise such protective membrane, in which case, the capsule can be hermetically contained in an external, e.g., flexible, secondary package. The package may be gastight and may contain protective gas such as nitrogen and/or CO2.

The upper wall 3 is preferably essentially disc-shaped. The upper wall preferably comprises an upwardly-oriented annular peripheral portion 3b which facilitates the insertion of the wall 3 in the body 2 and the sealing onto the inner surface of the body 2. The upper wall 3 may as well be of convex or concave shape.

The upper wall 3 may however as well be provided as a separate part attachable to the body 2 of the capsule 1 to allow filling of the capsule with beverage ingredients. In particular, a capsule kit may be provided to the consumer which comprises the body 2 and a lid member constituting the upper wall 3 and which is designed to be connected to the inside of the side wall 2a and/or to the rim 2d preferably without using tools. The upper wall 3 may be entirely detachable or be partially linked to it such as via a hinge.

The upper wall 3 of the capsule 1 is preferably made of the same material as the capsule body 2. For such as for example, the material can be chosen amongst plastic(s)s, or biodegradable plastic(s), bio-based polymer(s), cellulose-based material(s) such as paper and combinations thereof.

Figure 1 b relates to an enlarged sectional side view showing the upper wall 3 of the capsule 1 being placed into receiving means of a dedicated beverage preparation device. Thereby, at least a liquid injection member 20 of the device is selectively movable with respect to the upper wall 3 such as to be able to open, preferably pierce the capsule 1. In particular, the injection member 20 is movable in a direction along the centre axis Z of the capsule 1.

As can be seen in figure 1b, the injection member 20 is preferably equipped with opening means 20a such as for example a slanted cutting edge or a tapered (e.g., rounded) tip.

The central liquid inlet 6 of the capsule 1 is preferably surrounded by outlet channels respectively apertures 5 arranged at a peripheral portion 3a of the upper wall 3. The central liquid inlet 6 is provided at the centre axis Z of the capsule.

As illustrated in figure 1 b, the upper wall 3 comprises an annular engagement portion 10 which is preferably an integral part of the upper wall 3. Thereby, the annular engagement portion 10 forms an inwardly directed inlet flange 7 that extends in axial direction of the rotational axis Z of the capsule 1 beyond the lower face of the upper wall 3.

In particular, the inlet flange 7 formed by the engagement portion 10 initially protrudes to a height h1 from the upper surface of the upper wall 3 into the interior of the capsule 1, wherein the height h1 is greater than the thickness of the peripheral portion of the upper wall 3b. Thereby, height h1 is measured in a direction parallel to the centre axis Z from the upper surface of the peripheral portion of the upper wall 3b.

The thickness t2 of the inwardly directed annular engagement portion 10 is preferably thinner than the thickness t3 of the peripheral portion of the upper wall 3b. However, the thickness t2 may as well be equal to the thickness t3 of the peripheral portion of the upper wall 3b. The thickness t2 may be of constant thickness. Alternatively, the thickness t2 may decrease towards the central axis Z.

The liquid inlet 6 comprises a portion of reduced thickness 6a which constitutes an openable centre portion of the inlet 6 and which is preferably integrally formed with the annular engagement portion 10. In particular, the openable central portion 6a is preferably connected to an inner portion of the annular engagement portion 10 having an inner diameter d1, as demarcated by the transition line, which is smaller than the outer diameter d2 of the injection member 20 of the beverage preparation device.

The central portion 6a may be formed as an inverted cone of obtuse angle-shaped. In an alternative embodiment, the centre portion 6a may as well be of convex shape or concave shape. The shape may be a portion of sphere for instance.

In a particular preferred embodiment, the central portion 6a, the annular portion 10 and/or the upper wall 3 (outside the central liquid inlet 6) may be made from a material that softens and/or expands in volume in presence of hot water in order to increase the liquid-tight sealing engagement between the upper wall 3 and the perforating injection member 20.

Figure 1c relates to the injection member 20 being further lowered with respect to the capsule 1 in order to fully open the liquid inlet 6 of the capsule 1. Accordingly, the injection member 20 opens, preferably pierces, the central portion 6a. Thereby, the openable central portion 6a is preferably designed to be opened or ruptured in its centre through which the symmetric axis Z extends. Moreover, the central portion 6a is designed to be yielded to the circumference of the injection member 20 when being pierced by the injection member 20, in order to provide an inwardly orientated extension 7a to the annular inlet flange 7.

Due to the inner diameter d1 of the flange 7 being less than the outer diameter d2 of the injection member 20, the flange 7 is preferably at least partially yielded in direction towards the interior of the capsule, resulting in a height h1' of the flange 7 upon respectively after introduction of the injection member 20, wherein said height h1' is greater than the originally height h1.

The central portion 6a comprises a thickness t1 which is preferably lower than the thickness t2 of the annular engagement portion 10 and/or the thickness t3 of the peripheral portion of the upper wall 3b.

In a possible mode, the thickness t1 of the centre portion 6a decreases towards the centre axis Z of the capsule 1. Alternatively, the centre portion 6a may as well be of constant thickness t1.

After opening of the liquid inlet 6, liquid is preferably injected into the interior of the capsule 1 by means of a liquid path 20b provided within the injection member 20. Therefore, the beverage preparation device preferably comprises at least a liquid reservoir, a pump and heating means which are connected to the perforating injection member and designed to provide heated and/or pressurized liquid to the interior of the capsule 1.

The injection member 20 may be of varying shapes which may deviate from the shown examples. Thereby, in particular the lower portion 20a of the injection member 20 is preferably tapered as shown in figure 1b and 1c. However, the injection member 20 may as well comprise a rounded tapered tip replacing the cutting edge which may promote the stretching and forming of the sealing lip along the whole peripheral surface of the injection member.

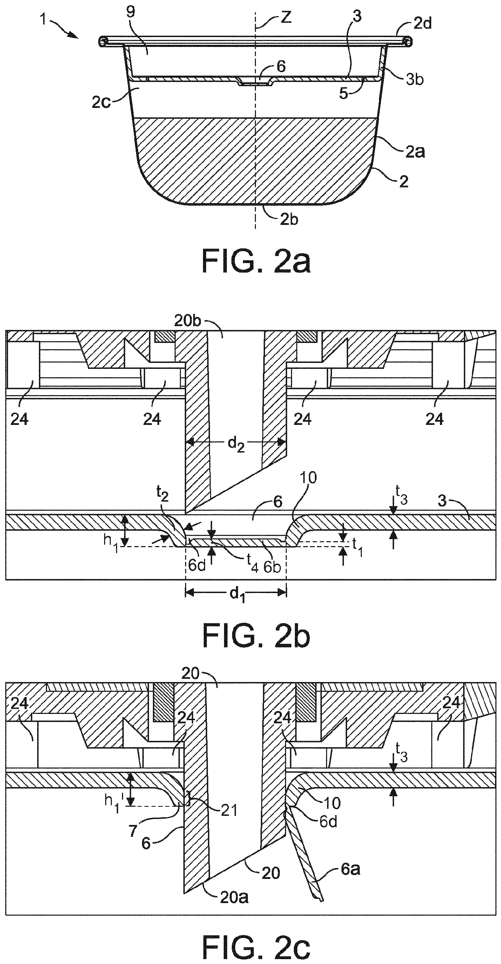

Figures 2a to 2c relate to another preferred embodiment of the capsule 1 according to the present invention, wherein the liquid inlet 6 comprises an annular engagement portion 10 and a circular respectively ring-shaped portion of reduced thickness 6a.

Thereby, the ring-shaped portion 6a constitutes a weakened annular portion 6a which encloses a central portion 6b of the liquid inlet 6 and which is preferably of constant thickness t1. The weakened portion 6a is arranged at the transition between the circumference of the central portion 6b and the annular engaging portion 10.

The thickness t4 of the central portion 6b is preferably lower than the thickness t2 of the annular engagement portion 10 and/or the thickness t3 of the peripheral portion of the upper wall 3b. The weakened portion 6a has a thickness t1 preferably lower than the thickness t4.

As can be seen in figure 2c, upon introduction of the injection member 20 into the annular engagement portion 10, the injection member 20 respectively the cutting edge 20a opens respectively tears or cuts the recessed portion 6a in order to enable the injection member 20 to be introduced into the interior of the capsule 1.

Thereby, the annular engagement portion 10 having an inner diameter d1 which is smaller than the outer diameter d2 of the injection member 20 is deflected outwardly and thus provides an inwardly directed force exerted onto an annular portion 21 of the injection member 20.

The weakened portion 6a may comprise an enforced portion 6d which is designed to act as hinge means suitable for connecting the centre portion 6b to the annular engagement portion 10 after the injection member 20 has been introduced into the interior of the capsule 1. Hence, the centre portion 6a is prevented from falling into the interior of the capsule, thereby negatively affecting the extraction process.

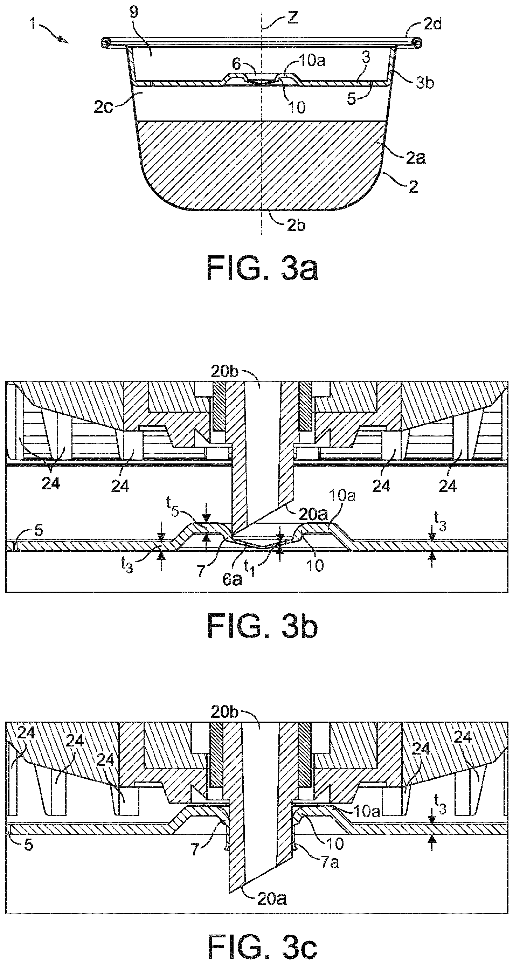

Figures 3a to 3c relate to another preferred embodiment of the capsule 1 according to the present invention, wherein the annular engagement portion 10 further comprises a reinforcement structure respectively support means 10a which are preferably geometrically designed to enable a piercing of the liquid inlet 6 by means of the injection member 20 with an increased resistance to buckling of the upper wall 3.

Therefore, the support means 10a are circumferentially arranged to the annular engagement portion 10 and protrude to the exterior of the capsule 1 from the upper surface of the preferably disc-shaped upper wall 3. The thickness t5 of the support means 10a may be equal to or less than the thickness t3 of the peripheral portion of the upper wall 3b. Alternatively, the thickness t5 may as well be greater than the thickness t3 of the peripheral portion of the upper wall 3b.

An upper surface of the support means 10a is preferably arranged in parallel to the preferably essentially disc-shaped upper wall 3. However, the upper surface of the support means 10a may as well be tapered with respect to the symmetric axis Z of the capsule.

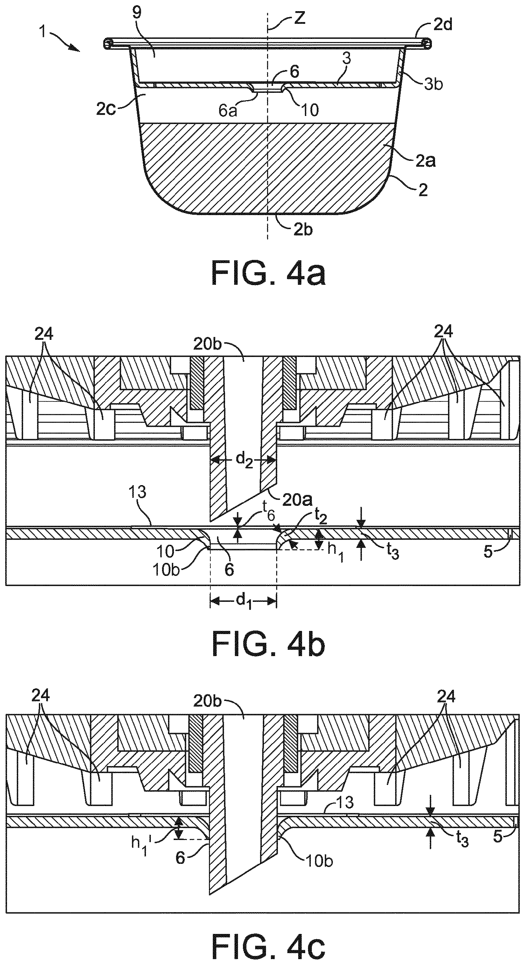

Figures 4a to 4c relate to another preferred embodiment of the capsule according to the present invention, wherein the liquid inlet 6 comprises an annular engagement portion 10 surrounding a central inlet opening 6a replacing the portion of reduced thickness of the preceding mode.

According to this embodiment, the central inlet opening 6a is covered by means of an additionally provided central sealing portion 13 which is preferably sealed to an upper surface of the upper wall 3 at least in an annular portion provided between the peripheral portion of the upper wall 3b and the engagement portion 10.

Thereby, the thickness t6 of the sealing portion 13 is preferably smaller than the thickness t3 of the peripheral portion of the upper wall 3b.

The central sealing portion 13 may be of equal material or of different material than the annular engagement portion 10 and/or the upper wall 3. In a particular preferred embodiment, the central sealing portion 13 may be made from a material that softens and/or expand in presence of hot water in order to increase the liquid-tight sealing engagement between the upper wall 3 and the perforating injection member 20.

The annular engagement portion 10 forms an inwardly protruding inlet flange and has a lower edge 10b of reduced inner diameter d1 which is smaller than the outer diameter d2 of the injection member 20.

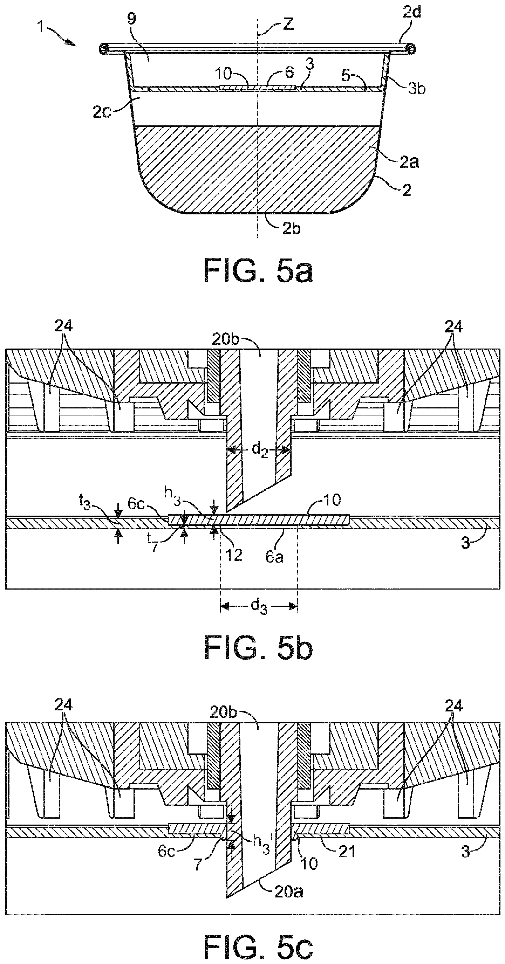

Figures 5a to 5c relate to another preferred embodiment of a capsule according to the present invention, wherein the upper wall 3 comprises an annular engagement portion 10 and a portion of reduced thickness 6a which are designed to interact upon introduction of the injection member in order to form an inwardly protruding sealing flange 7.

Thereby, the annular engagement portion 10 which is arranged radially inside of the peripheral portion of the upper wall 3b at least partially overlaps with the portion of reduced thickness 6a.

The portion of reduced thickness 6a may be constituted by an opening integrally formed with the upper wall 3 as shown in figures 5a to 5c.

A stepped portion 12 of the upper wall 3 which is overlapped respectively covered by the engagement portion 10 delimits the portion of reduced thickness respectively the opening 6a. In particular, the stepped portion 12 provides a reduction in thickness which is overlapped by the engagement portion 10.

Thereby, the engagement portion 10 is preferably arranged on the upper surface of the upper wall 3a or within a provided recess 6c circumferentially provided to the opening 6a and which is of lower thickness t7 than the peripheral portion of the upper wall 3b.

The engagement portion 10 is preferably of different material than the upper wall 3.

The engagement portion 10 is preferably formed of a material which is of softer consistence respectively which is more resilient and/or flexible than the upper wall 3.

In a particular preferred embodiment, the engagement portion 10 is made of material that softens and/or expand in presence of hot water in order to increase the liquid-tight sealing engagement between the upper wall 3 and the perforating injection member 20. For instance, the material may be PLA or starch-based material which softens when contacted by a liquid at a temperature above 80°C,

The height h3 of the engagement portion 10 before the interaction with the injection member 20 is preferably equal to or more than the thickness t3 of the peripheral portion of the upper wall 3b.

As shown in figure 5b, the stepped portion 12 preferably comprises an inner diameter d3 which is greater than the outer diameter d2 of the injection member 20.

Upon introduction of the injection member 20 into the liquid inlet 6 of the capsule 1, the stepped portion 12 interacts with the overlapping annular engagement portion 10 which is elastically and/or plastically deformed about the inner diameter d3 of the stepped portion 12 in order to form an inwardly protruding inlet flange 7 about the circumference of the injection member 20.

Thereby, the inlet flange 7 has a height h3' which is greater than the initial height h3 of the engagement portion 10. The height h3' of the formed inlet flange 7 is preferably constant about the circumference of the injection member 20.

## Claims

1. A capsule (1) for containing beverage ingredients for producing a beverage in a beverage preparation device upon liquid injection into the capsule and by rotating the capsule around its central axis in the device for forcing liquid through the beverage ingredients in the capsule causing beverage to leave the capsule at the periphery of the capsule, the capsule (1) comprising
a side wall (2a), a bottom wall (2b), a mouth opening (2c) and a flange-like rim (2d) extending outwardly, and
an upper wall (3) attached to the flange-like rim (2d) and/or to the side wall (2a) and at least partially covering the mouth opening (2c),
the upper wall (3) comprising a central liquid inlet (6) for injection of liquid in the capsule and a peripheral portion (3a) of upper wall (3) comprising outlet apertures (5) for beverage to leave the capsule and,
an annular engagement portion (10) located at least between the peripheral portion (3a) and the central liquid inlet (6) and arranged to form an inlet flange (7), protruding toward the interior of the capsule, by a predefined design or by deformation upon introduction of a dedicated injection member (20) of the beverage preparation device through the inlet (6);
**characterized in that** such inlet flange (7) provides a liquid-tight sealing interaction with the outer surface of the injection member (20),
and **in that**
- the inlet flange (7) extends by a wall portion (6a) of thickness reduced relative to the upper wall (3) and closing the central liquid inlet (6) and the wall portion of reduced thickness (6a) has a thickness (t1) of less than 500 microns, more preferably lower than 400 microns and the annular engagement portion (10) has a thickness (t2) of more than 400 microns and the reduced thickness (t1) is lower than the thickness (t2) of the annular engagement portion (10) and/or,
- the upper wall (3) is at least partially made from a material that softens and/or expands in presence of hot water in order to increase the liquid-tight sealing engagement between an annular engagement portion (10) and the dedicated injection member (20).

2. A capsule according to claim 1,
wherein the central liquid inlet (6) forms a through-opening (6a).

3. A capsule according to any of the preceding claims,
wherein the annular engagement portion (10) protrudes from the peripheral portion (3a) or is formed in recess from the peripheral portion (3a) of the upper wall.

4. A capsule according to any of the preceding claims,
wherein the annular engagement portion (10) is designed to be plastically or elastically deformable upon introduction of the dedicated injection member (20) through the central liquid inlet (6).

5. A capsule according to any of the preceding claims,
wherein the annular engagement portion (10) has a thickness lower than the thickness of the peripheral portion (3a) or decreases in thickness from the peripheral portion (3a) towards the central liquid inlet (6).

6. A capsule according to any of the preceding claims,
wherein the annular engagement portion (10) is integrally formed with the upper wall (3) or formed as an added portion (10) to the peripheral portion (3a).

7. A capsule according to claim 6,
wherein the annular engagement portion (10) is shaped as a funnel directed towards the interior of the capsule.

8. A capsule according to any of the preceding claims,
wherein the annular engagement portion (10) comprises a minimum inner diameter (d1) which is smaller than an outer diameter (d2) of the perforating injection member (20).

9. A capsule according to claim 1, wherein the wall portion of reduced thickness (6a) has an elongation at yield of at least 10%, preferably at least 50%, most preferably at least 100% according to ISO 527-3:1995 and wherein the annular engagement portion (10) is preferably of different material arranged to cover a central inlet opening (6a) of the upper wall (3).

10. A capsule according to claim 9,
wherein the annular engagement portion (10) is arranged to overlap at least an annular portion (6c) of the peripheral portion (3a) surrounding the central liquid inlet (6) when seen in top view onto the capsule and wherein the annular engagement portion (10) is preferably formed of softer and/or more resilient material than the peripheral portion (3a) of the upper wall.

11. A beverage preparation system comprising a capsule (1) according to any of the preceding claims and
a beverage preparation device comprising a liquid injections means (20) connected to a liquid reservoir of the device and designed for supplying liquid to the capsule (1).

12. A kit for producing a beverage in a beverage preparation device comprising:
- a rotational-symmetric capsule body (2) for being filled with beverage ingredients, the capsule body (2) comprising a side wall (2a), a bottom wall (2b), a mouth opening (2c) and a flange-like rim (2d) extending outwardly, and
- an upper wall formed by a lid member (3) which is designed to be mechanically associated to the capsule body (2) by the consumer, preferably without using tools, in order to close off the mouth opening (2c) of the body (2) and avoid the leakage of any ingredients filled into the capsule body (2),
wherein the upper wall (3) comprising a central liquid inlet (6) for injection of liquid in the capsule and a peripheral portion (3a) of wall (3) comprising outlet apertures (5) for beverage to leave the capsule and
an annular engagement portion (10) located at least between the peripheral portion (3a) and the inlet (6) and arranged to form an inwardly protruding inlet flange (7) by a predefined design or by deformation upon introduction of a dedicated injection member (20) of a beverage preparation device through the inlet (6);
**characterized in that** such inlet flange (7) providing a sealing interaction with the outer surface of the injection member (20)
and **in that**
- the inlet flange (7) extends by a wall portion (6a) of thickness reduced relative to the upper wall (3) and closing the central liquid inlet (6) and the wall portion of reduced thickness (6a) has a thickness (t1) of less than 500 microns, more preferably lower than 400 microns and the annular engagement portion (10) has a thickness (t2) of more than 400 microns and the reduced thickness (t1) is lower than the thickness (t2) of the annular engagement portion (10) and
- the upper wall (3) is at least partially made from a material that softens and/or expands in presence of hot water in order to increase the liquid-tight sealing engagement between an annular engagement portion (10) and the dedicated injection member (20).

## Patentansprüche

1. Kapsel (1) zur Aufnahme von Getränkeinhaltsstoffen zur Herstellung eines Getränks in einer Getränkezubereitungsvorrichtung nach Injektion von Flüssigkeit in die Kapsel und durch Drehen der Kapsel um ihre Mittelachse in der Vorrichtung, um Flüssigkeit durch die Getränkeinhaltsstoffe in der Kapsel zu pressen und zu bewirken, dass Getränk am Umfang der Kapsel aus der Kapsel austritt, wobei die Kapsel (1) umfasst:
eine Seitenwand (2a), eine untere Wand (2b), eine Auslassöffnung (2c) und einen nach außen verlaufenden flanschartigen Rand (2d) und
eine obere Wand (3), die mit dem flanschartigen Rand (2d) und/oder der Seitenwand (2a) verbunden ist und mindestens teilweise die Auslassöffnung (2c) bedeckt,
wobei die obere Wand (3) einen zentralen Flüssigkeitseinlass (6) zur Injektion von Flüssigkeit in die Kapsel und einen peripheren Abschnitt (3a) der oberen Wand (3) umfasst, der Austrittsöffnungen (5) umfasst, damit das Getränk aus der Kapsel austreten kann, und
einen ringförmigen Eingriffsabschnitt (10), der mindestens zwischen dem peripheren Abschnitt (3a) und dem zentralen Flüssigkeitseinlass (6) liegt und dazu angeordnet ist, einen Einlassflansch (7) zu bilden, der aufgrund einer vorgegebenen Konstruktion oder durch Verformung nach Einführen eines bestimmten Injektionselements (20) der Getränkezubereitungsvorrichtung durch den Einlass (6) zum Inneren der Kapsel hin übersteht;
**dadurch gekennzeichnet, dass** dieser Einlassflansch (7) in flüssigkeitsdichter, abdichtender Wechselwirkung mit der Außenfläche des Injektionselements (20) steht,
und **dadurch, dass:**
- der Einlassflansch (7) neben einem Wandabschnitt (6a) mit im Verhältnis zur oberen Wand (3) verminderter Dicke verläuft und den zentralen Flüssigkeitseinlass (6) verschließt, und der Wandabschnitt mit verminderter Dicke (6a) eine Dicke (t1) von weniger als 500 Mikron, vorzugsweise von weniger als 400 Mikron aufweist und der ringförmige Eingriffsabschnitt (10) eine Dicke (t2) von mehr als 400 Mikron aufweist und die verminderte Dicke (t1) geringer ist als die Dicke (t2) des ringförmigen Eingriffsabschnitts (10) und/oder,
- die obere Wand (3) zumindest teilweise aus einem Material gefertigt ist, das in Gegenwart von heißem Wasser erweicht und/oder sich ausdehnt, um den flüssigkeitsdichten Abdichtungseingriff zwischen einem ringförmigen Eingriffsabschnitt (10) und dem zugeordneten Injektionselement (20) zu vergrößern.

2. Kapsel nach Anspruch 1,
wobei der zentrale Flüssigkeitseinlass (6) eine durchgehende Öffnung (6a) bildet.

3. Kapsel nach einem der vorstehenden Ansprüche,
wobei der ringförmige Eingriffsabschnitt (10) von einem peripheren Abschnitt (3a) hinausragt oder als Vertiefung vom peripheren Abschnitt (3a) der oberen Wand aus ausgebildet ist.

4. Kapsel nach einem der vorstehenden Ansprüche,
wobei der ringförmige Eingriffsabschnitt (10) dazu ausgelegt ist, nach Einführen des zugeordneten Injektionselements (20) durch den zentralen Flüssigkeitseinlass (6) plastisch oder elastisch verformbar zu sein.

5. Kapsel nach einem der vorstehenden Ansprüche,
wobei der ringförmige Eingriffsabschnitt (10) eine geringere Dicke als die Dicke des peripheren Abschnittes (3a) aufweist oder seine Dicke vom peripheren Abschnitt (3a) zum zentralen Flüssigkeitseinlass (6) hin abnimmt.

6. Kapsel nach einem der vorstehenden Ansprüche,
wobei der ringförmige Eingriffsabschnitt (10) aus einem Stück mit der oberen Wand (3) oder als zum peripheren Abschnitt (3a) hinzugefügter Abschnitt (10) ausgebildet ist.

7. Kapsel nach Anspruch 6,
wobei der ringförmige Eingriffsabschnitt (10) als ein zum Inneren der Kapsel gerichteter Trichter geformt ist.

8. Kapsel nach einem der vorstehenden Ansprüche,
wobei der ringförmige Eingriffsabschnitt (10) einen kleinsten Innendurchmesser (d1) aufweist, der kleiner ist als ein Außendurchmesser (d2) des perforierenden Injektionselements (20).

9. Kapsel nach Anspruch 1, wobei der Wandabschnitt mit verminderter Dicke (6a) eine Streckdehnung von mindestens 10 %, vorzugsweise von mindestens 50 %, am meisten bevorzugt von mindestens 100 % nach ISO 527-3:1995 aufweist und wobei der ringförmige Eingriffsabschnitt (10) vorzugsweise aus einem anderen Material gefertigt ist, das dazu angeordnet ist, eine zentrale Einlassöffnung (6a) der oberen Wand (3) zu bedecken.

10. Kapsel nach Anspruch 9,
wobei der ringförmige Eingriffsabschnitt (10) dazu angeordnet ist, in der Draufsicht auf die Kapsel zumindest einen ringförmigen Abschnitt (6c) des peripheren Abschnitts (3a), der den zentralen Flüssigkeitseinlass (6) umgibt, zu überlappen, und wobei der ringförmige Eingriffsabschnitt (10) vorzugsweise aus weicherem und/oder elastischerem Material gefertigt ist als der periphere Abschnitt (3a) der oberen Wand.

11. Getränkezubereitungssystem, umfassend eine Kapsel (1) nach einem der vorstehenden Ansprüche und
Getränkezubereitungsvorrichtung, umfassend ein Flüssigkeitsinjektionsmittel (20), das mit einem Flüssigkeitsbehälter der Vorrichtung verbunden und dazu ausgelegt ist, der Kapsel (1) Flüssigkeit zuzuführen.

12. Kit zur Herstellung eines Getränks in einer Getränkezubereitungsvorrichtung, umfassend:
- einen rotierend symmetrischen Kapselkörper (2), der dazu bestimmt ist, mit Getränkeinhaltsstoffen befüllt zu werden, wobei der Kapselkörper (2) eine Seitenwand (2a), eine untere Wand (2b), eine Auslassöffnung (2c) und einen nach außen verlaufenden flanschartigen Rand (2d) umfasst; und
- eine obere Wand, gebildet durch ein Deckelelement (3), das dazu ausgelegt ist, mechanisch durch den Verbraucher mit dem Kapselkörper (2) verbunden zu werden, vorzugsweise ohne Verwendung von Werkzeugen, um die Auslassöffnung (2c) des Körpers (2) zu verschließen und das Austreten von jeglichen in den Kapselkörper (2) gefüllten Inhaltsstoffen zu vermeiden,
wobei die obere Wand (3) einen zentralen Flüssigkeitseinlass (6) zur Injektion von Flüssigkeit in die Kapsel und einen peripheren Abschnitt (3a) der Wand (3) umfasst, der Austrittsöffnungen (5) umfasst, damit das Getränk aus der Kapsel austreten kann, und
einen ringförmigen Eingriffsabschnitt (10), der mindestens zwischen dem peripheren Abschnitt (3a) und dem Einlass (6) liegt und dazu angeordnet ist, einen nach innen überstehenden Einlassflansch (7) durch eine vorgegebene Konstruktion oder durch Verformung nach Einführen eines zugeordneten Injektionselements (20) der Getränkezubereitungsvorrichtung durch den Einlass (6) zu bilden;
**dadurch gekennzeichnet, dass** dieser Einlassflansch (7) in abdichtender Wechselwirkung mit der Außenfläche des Injektionselements (20) steht,
und **dadurch, dass:**
- der Einlassflansch (7) in der Nähe eines Wandabschnitts (6a) mit im Verhältnis zur oberen Wand (3) verminderter Dicke verläuft und den zentralen Flüssigkeitseinlass (6) verschließt, und der Wandabschnitt mit verminderter Dicke (6a) eine Dicke (t1) von weniger als 500 Mikron, vorzugsweise von weniger als 400 Mikron aufweist und der ringförmige Eingriffsabschnitt (10) eine Dicke (t2) von mehr als 400 Mikron aufweist und die verminderte Dicke (t1) geringer ist als die Dicke (t2) des ringförmigen Eingriffsabschnitts (10) und
- die obere Wand (3) zumindest teilweise aus einem Material gefertigt ist, das in Gegenwart von heißem Wasser erweicht und/oder sich ausdehnt, um den flüssigkeitsdichten Abdichtungseingriff zwischen einem ringförmigen Eingriffsabschnitt (10) und dem zugeordneten Injektionselement (20) zu vergrößern.

## Revendications

1. Capsule (1) destinée à contenir des ingrédients de boisson pour produire une boisson dans un dispositif de préparation de boissons lors de l'injection de liquide dans la capsule et par rotation de la capsule autour de son axe central dans le dispositif afin de faire passer de force du liquide à travers les ingrédients de boisson dans la capsule, amenant de la boisson à sortir de la capsule au niveau de la périphérie de la capsule, la capsule (1) comprenant
une paroi latérale (2a), une paroi de fond (2b), une ouverture d'embouchure (2c) et une collerette de type bride (2d) s'étendant vers l'extérieur, et
une paroi supérieure (3) fixée à la collerette de type bride (2d) et/ou à la paroi latérale (2a) et recouvrant au moins partiellement l'ouverture d'embouchure (2c),
la paroi supérieure (3) comprenant une entrée centrale de liquide (6) pour l'injection de liquide dans la capsule et une partie périphérique (3a) de paroi supérieure (3) comprenant des ouvertures de sortie (5) pour que la boisson sorte de la capsule et,
une partie de mise en prise annulaire (10) située au moins entre la partie périphérique (3a) et l'entrée centrale de liquide (6) et agencée pour former une bride d'entrée (7), saillante vers l'intérieur de la capsule, grâce à une conception prédéfinie ou par déformation lors de l'introduction d'un élément d'injection dédié (20) du dispositif de préparation de boissons à travers l'entrée (6) ;
**caractérisée en ce qu'**une telle bride d'entrée (7) fournit une interaction de scellement étanche aux liquides avec la surface extérieure de l'élément d'injection (20),
et **en ce que**
- la bride d'entrée (7) est prolongée par une partie de paroi (6a) d'épaisseur réduite par rapport à la paroi supérieure (3) et fermant l'entrée centrale de liquide (6) et la partie de paroi (6a) d'épaisseur réduite a une épaisseur (t1) inférieure à 500 micromètres, plus préférablement inférieure à 400 micromètres, et la partie de mise en prise annulaire (10) a une épaisseur (t2) supérieure à 400 micromètres et l'épaisseur réduite (t1) est inférieure à l'épaisseur (t2) de la partie de mise en prise annulaire (10) et/ou,
- la paroi supérieure (3) est constituée au moins partiellement d'un matériau qui se ramollit et/ou se dilate en présence d'eau chaude afin d'augmenter le contact de scellement étanche aux liquides entre une partie de mise en prise annulaire (10) et l'élément d'injection dédié (20).

2. Capsule selon la revendication 1,
dans laquelle l'entrée centrale de liquide (6) forme une ouverture traversante (6a).

3. Capsule selon l'une quelconque des revendications précédentes,
dans laquelle la partie de mise en prise annulaire (10) fait saillie depuis la partie périphérique (3a) ou est formée en creux depuis la partie périphérique (3a) de la paroi supérieure.

4. Capsule selon l'une quelconque des revendications précédentes,
dans laquelle la partie de mise en prise annulaire (10) est conçue pour pouvoir se déformer plastiquement ou élastiquement lors de l'introduction de l'élément d'injection dédié (20) à travers l'entrée centrale de liquide (6).

5. Capsule selon l'une quelconque des revendications précédentes,
dans laquelle la partie de mise en prise annulaire (10) a une épaisseur inférieure à l'épaisseur de la partie périphérique (3a) ou diminue en épaisseur depuis la partie périphérique (3a) en direction de l'entrée centrale de liquide (6).

6. Capsule selon l'une quelconque des revendications précédentes,
dans laquelle la partie de mise en prise annulaire (10) est formée d'une seule pièce avec la paroi supérieure (3) ou est formée en tant que partie ajoutée (10) à la partie périphérique (3a).

7. Capsule selon la revendication 6,
dans laquelle la partie de mise en prise annulaire (10) est en forme d'entonnoir dirigé vers l'intérieur de la capsule.

8. Capsule selon l'une quelconque des revendications précédentes,
dans laquelle la partie de mise en prise annulaire (10) comprend un diamètre intérieur minimum (d1) qui est inférieur à un diamètre extérieur (d2) de l'élément d'injection (20) de perforation.

9. Capsule selon la revendication 1, dans laquelle la partie de paroi d'épaisseur réduite (6a) a un allongement à la rupture d'au moins 10 %, de préférence au moins 50 %, idéalement au moins 100 % selon l'ISO 527-3 : 1995 et dans laquelle la partie de mise en prise annulaire (10) est de préférence d'un matériau différent agencé pour recouvrir une ouverture de liquide centrale (6a) de la paroi supérieure (3).

10. Capsule selon la revendication 9,
dans laquelle la partie de mise en prise annulaire (10) est agencée pour chevaucher au moins une partie annulaire (6c) de la partie périphérique (3a) entourant l'entrée centrale de liquide (6) en la regardant depuis le dessus sur la capsule et dans laquelle la partie de mise en prise annulaire (10) est de préférence constituée d'un matériau plus mou et/ou plus élastique que la partie périphérique (3a) de la paroi supérieure.

11. Système de préparation de boissons comprenant une capsule (1) selon l'une quelconque des revendications précédentes et
un dispositif de préparation de boissons comprenant un moyen d'injection de liquide (20) connecté à un réservoir de liquide du dispositif et conçu pour fournir du liquide à la capsule (1).

12. Kit de production d'une boisson dans un dispositif de préparation de boissons comprenant :
- un corps de capsule (2) symétrique en rotation destiné à être rempli d'ingrédients de boisson, le corps de capsule (2) comprenant une paroi latérale (2a), une paroi de fond (2b), une ouverture d'embouchure (2c) et une collerette de type bride (2d) s'étendant vers l'extérieur, et
- une paroi supérieure formée par un élément couvercle (3) qui est conçu pour être associé mécaniquement au corps de capsule (2) par le consommateur, de préférence sans utiliser d'outils, afin de fermer l'ouverture d'embouchure (2c) du corps (2) et d'éviter la fuite de quelconques ingrédients se trouvant dans le corps de capsule (2),
la paroi supérieure (3) comprenant une entrée centrale de liquide (6) pour l'injection de liquide dans la capsule et une partie périphérique (3a) de la paroi (3) comprenant des ouvertures de sortie (5) pour que la boisson sorte de la capsule et
une partie de mise en prise annulaire (10) située au moins entre la partie périphérique (3a) et l'entrée (6) et agencée pour former une bride d'entrée (7) s'étendant vers l'intérieur grâce à une conception prédéfinie ou par déformation lors de l'introduction d'un élément d'injection dédié (20) d'un dispositif de préparation de boissons à travers l'entrée (6) ;
**caractérisé en ce qu'**une telle bride d'entrée (7) fournit une interaction de scellement étanche aux liquides avec la surface extérieure de l'élément d'injection (20)
et **en ce que**
- la bride d'entrée (7) est prolongée par une partie de paroi (6a) d'épaisseur réduite par rapport à la paroi supérieure (3) et fermant l'entrée centrale de liquide (6) et la partie de paroi (6a) d'épaisseur réduite a une épaisseur (t1) inférieure à 500 micromètres, plus préférablement inférieure à 400 micromètres, et la partie de mise en prise annulaire (10) a une épaisseur (t2) supérieure à 400 micromètres et l'épaisseur réduite (t1) est inférieure à l'épaisseur (t2) de la partie de mise en prise annulaire (10) et
- la paroi supérieure (3) est constituée au moins partiellement d'un matériau qui se ramollit et/ou se dilate en présence d'eau chaude afin d'augmenter le contact de scellement étanche aux liquides entre une partie de mise en prise annulaire (10) et l'élément d'injection dédié (20).
